(19) Europäisches Patentamt
European Patent Office
Office européen des brevets

(11) Publication number: 0 098 897 A2

(12) # EUROPEAN PATENT APPLICATION

(21) Application number: 82111595.3

(22) Date of filing: 14.12.82

(51) Int. Cl.$^3$: H 01 F 31/00

(30) Priority: 09.04.82 US 367051

(43) Date of publication of application: 25.01.84 Bulletin 84/4

(84) Designated Contracting States: AT BE CH DE FR GB IT LI LU NL SE

(71) Applicant: Meyer, Stanley A.
3792 Broadway
Grove City Ohio 43123(US)

(72) Inventor: Meyer, Stanley A.
3792 Broadway
Grove City Ohio 43123(US)

(74) Representative: Wasmeier, Alfons, Dipl.-Ing. et al,
Postfach 382 Greflingerstrasse 7
D-8400 Regensburg(DE)

(54) **Electrical generator utilizing magnetized particles.**

(57) An electrical particle generator comprising a non-magnetic pipe in a closed loop having a substantial amount of magnetized particles encapsulated therein. A magnetic accelerator assembly positioned on said pipe having an inductive primary winding and a low voltage input to said winding. A secondary winding positioned on said pipe opposite to said primary winding. Upon voltage being applied to said primary winding said magnetized particles are passed through said magnetic accelerator assembly with increased velocity. The velocity accelerated particles continuing through said pipe induce an electrical voltage/current potential as they pass through the secondary winding. The increased secondary voltage is utilized in an amplifier arrangement.

30
34
10
22
16
12
14
20
32

FIG. 1

EP 0 098 897 A2

Croydon Printing Company Ltd.

TITLE MODIFIED
see front page



0098897

# ELECTRICAL PARTICLE GENERATOR


## ABSTRACT

An electrical particle generator comprising a non-magnetic pipe in a closed loop having a substantial amount of magnetized particles encapsulated therein. A magnetic accelerator assembly positioned on said pipe having an inductive primary winding and a low voltage input to said winding. A secondary winding positioned on said pipe opposite to said primary winding. Upon voltage being applied to said primary winding said magnetized particles are passed through said magnetic accelerator assembly with increased velocity. The velocity accelerated particles continuing through said pipe induce an electrical voltage/current potential as they pass through the secondary winding. The increased secondary voltage is utilized in an amplifier arrangement.


## BACKGROUND AND PRIOR ART

The prior art teachings expound the fundamental principle that a magnetic field passing through inductive windings will generate a voltage/current or enhance the voltage thereacross if the winding is a secondary winding.

It is also taught by the prior art that a magnetic element in a primary inductive field will be attracted at one end of the coil and repelled at the other. That is a moving magnetic element will be accelerated in motion by the attraction and repulsion of the magnetic field of the primary inductive winding.

In the conventional step-up transfer the voltage across will impart further magnetic force to the particles. This magnetic attraction and the repulsion considerably enhances the motion of the discrete particles within the pipe. The particles are ejected from the area of the accelerator with an increased velocity motion.

The magnetic elements proceed in the closed loop pipe at a speed considerably greater than their normal movement due to the accelerator action. As the magnetic elements pass through the core of the secondary winding there is induced a voltage therein. In this way a much greater voltage is induced in the secondary winding of the transformer.

OBJECTS

It is principal object of the present invention to provide an electrical generator capable of producing a voltage/current much greater in magnitude hereintofore possible.

Another object of the present invention is to provide such an electrical generator utilizing magnetized elements and a magnetic accelerator.

Another object of the present invention is to provide such an electrical generator that can control the amplitude of the output.

Another object of the present invention is to provide such an electrical generator that may be utilized with direct current, alternating current, pulsed, or other configurations of waveforms.

Another object of the present invention is to provide such an electrical generator that may be utilized in a single phase or three phase electrical system.

Still another object of the present invention is to provide a generator for developing magnetized particles for use in an electrical particle accelerator.

A further object of the present invention is to provide such an electrical generator that utilizes components readily available are adaptable to a simplified embodiment.

Other objects and features of the present invention will become apparent from the following detailed description where taken in conjunction with the drawings in which:

BRIEF DESCRIPTION OF DRAWINGS

Figure 1 is a simplified illustration of the principles of the invention shown partly in crossection and partly pictorially.

Figure 2 is an electrical schematic illustration of the embodiment of Figure 1.

Figure 3 is an illustration similar to Figure 2 but adaptable to 3 phase.

Figure 4 is a first alternative arrangement in a preferred illustration of the invention.

Figure 5 is another alternative arrangement in a preferred illustration of the invention.

Figure 6 is another alternative arrangement in a preferred illustration of the invention.

Figure 7 is another alternative arrangement in a preferred illustration of the invention.

Figure 8 is another alternative arrangement in a preferred illustration of the invention.

Figure 9 is an alternative arrangement for a magnetic drive accelerator assembly.

Figure 10 is a mechanical illustration of a magnetic particle generator for developing magnetic particles utilized in the present invention.

DETAILED DESCRIPTION OF INVENTION

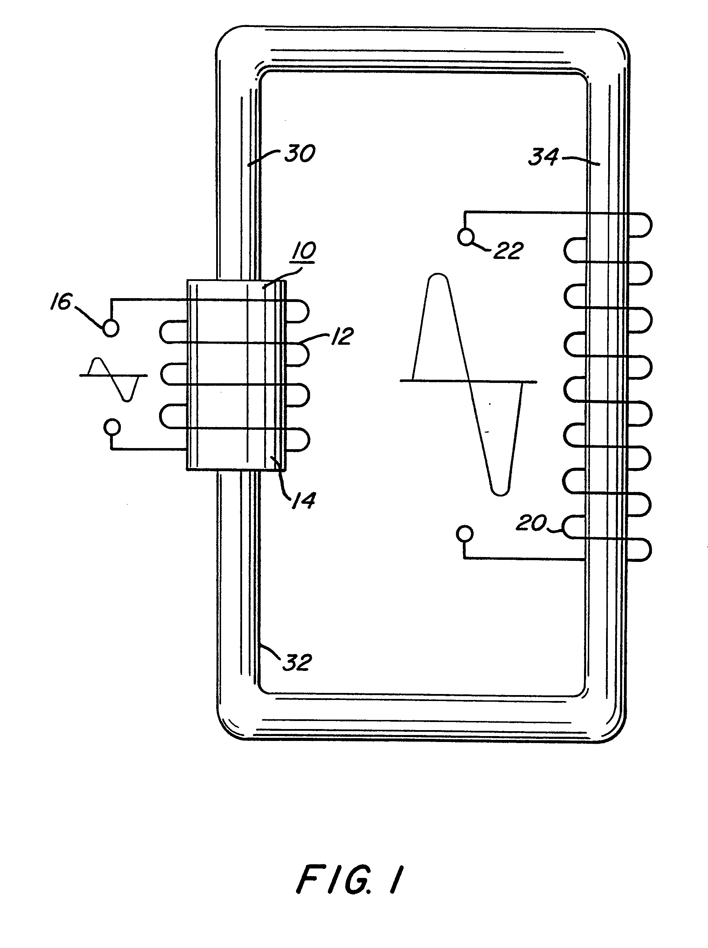

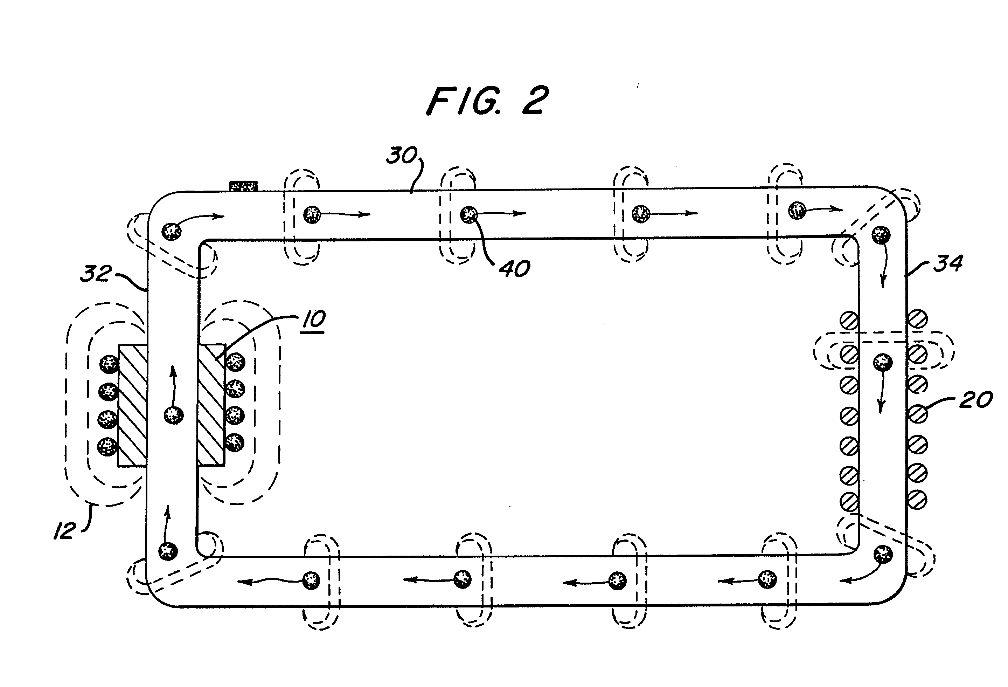

With particular reference to Figures 1 and 2 there is illustrated the invention in its mostly simplified schematic embodiment.

The system of the invention comprises a primary winding coil magnetic accelerator assembly 10, a closed loop non-magnetic pipe 30, and a secondary winding 20.

The magnetic accelerator assembly comprises primary windings 12 a magnetic core 14 and voltage taps 16. The primary windings are positioned around end 32 of closed loop pipe 30 or tubing of non-magnetic material.

At the opposite end 34 of the closed loop pipe 30 there is positioned thereon secondary windings 20. A voltage tap 22 on secondary winding 20 permits the utilization of the voltage induced therein.

Within the pipe 30 there is encapsulated a substantial quantity of magnetic elements 40 of Figure 2. The elements 40 must be sufficiently light to be freely mobile. Therefore, the elements may be particles suspended in a fluid medium such as gas, liquid, or light-weight movable solid particles and more preferably gas. In the application of suspended solid magnetic particles it may be desireable to evacuate the tubing to reduce the resistance to its flow. The magnetized elements 40 are discrete elements, that is, each particle or a miniscule part thereof is separately magnetized. Further, the action as hereinafter described is an action upon each particle and not upon the mass.

The voltage applied to terminals 16 of the primary winding 12 is a low voltage the magnitude of which may be utilized as an input signal control. By varying the input voltage the accelerator will vary the velocity of the speed of the particles; which, in turn vary the magnitude of the voltage/current output of the secondary winding 20.

The output 22 of the secondary transformer 20 is a high voltage/current output.

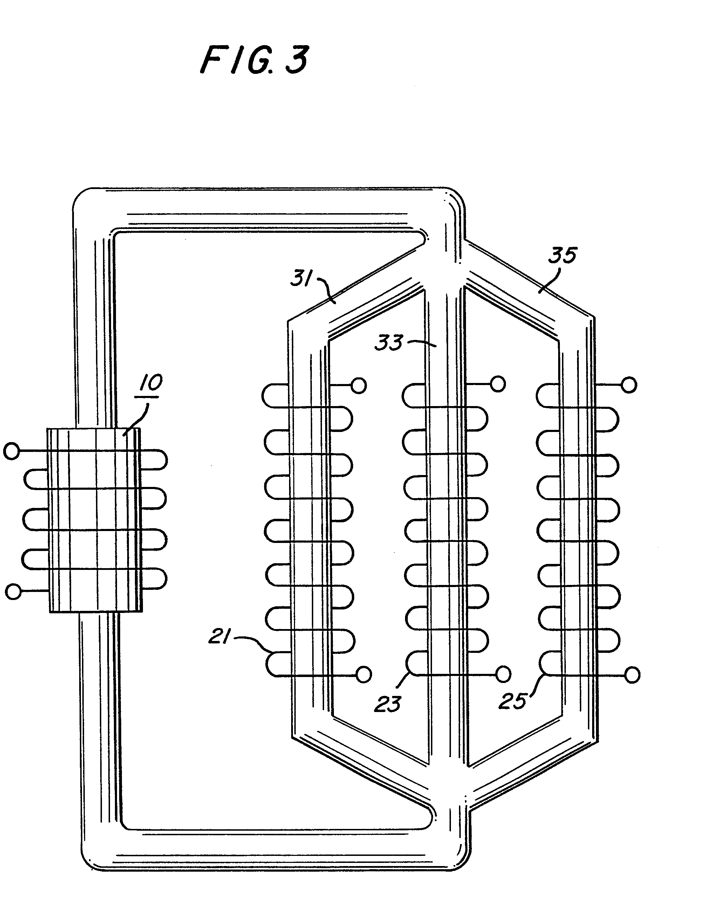

It can be appreciated that the system of Figures 1 and 2 utilizing a single closed loop will provide a single phase output in the secondary winding. With particular reference to Figure 3 there is illustrated a closed loop system having three parallel non-magnetic tubes 31, 33, and 35. On each tube or pipe there is a respective secondary winding 21, 23, and 25.

Each of the secondary windings 21, 23, and 25 are a single phase much as that shown in Figures 1 and 2. The three pipes, having a common junction at its input and at its output, with the respective three secondary pick-up windings provide a balance three-phase (3) electrical system.

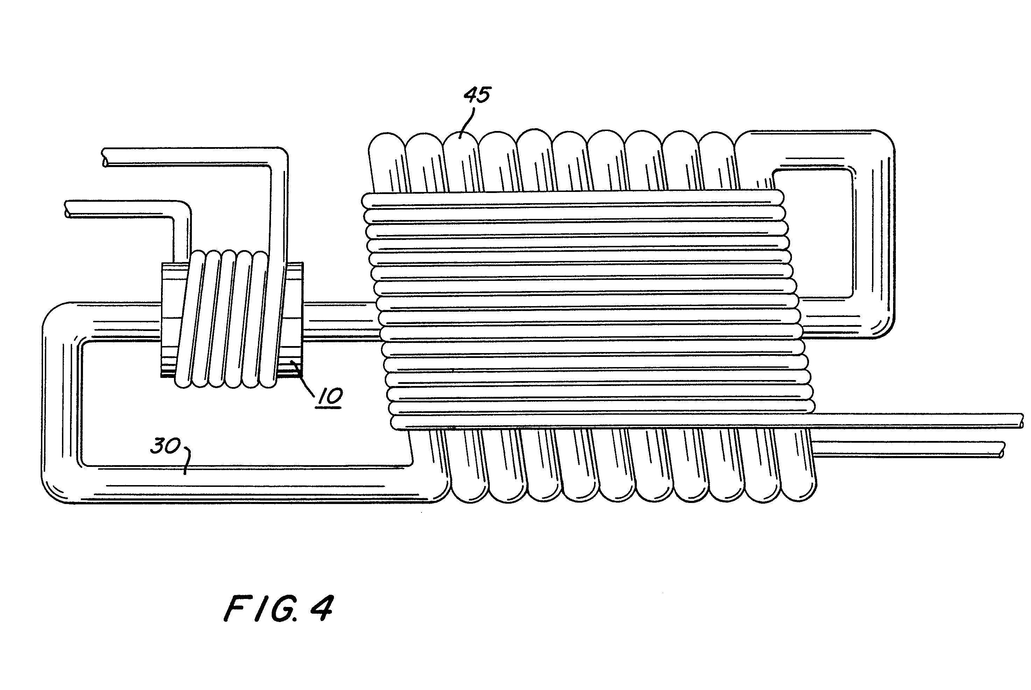

The electrical power generator illustrated in Figure 4 is in electrical operation identical to that in Figures 1 and 2. The physical configuration of the arrangement is adapted to be utilized in a high moisture environment. An insulating coating 45 completely covers the pipe 30, as well as all electrical windings.

In Figure 4 there is illustrated that increasing the number of coils with a given size winding the voltage/current output is increased. The physical configuration illustrated is such that the vertical aspects as well as the horizontal aspect are utilized. In this way a large diameter pipe can be used with a substantial number of turns of heavy-gauge high-current wire.

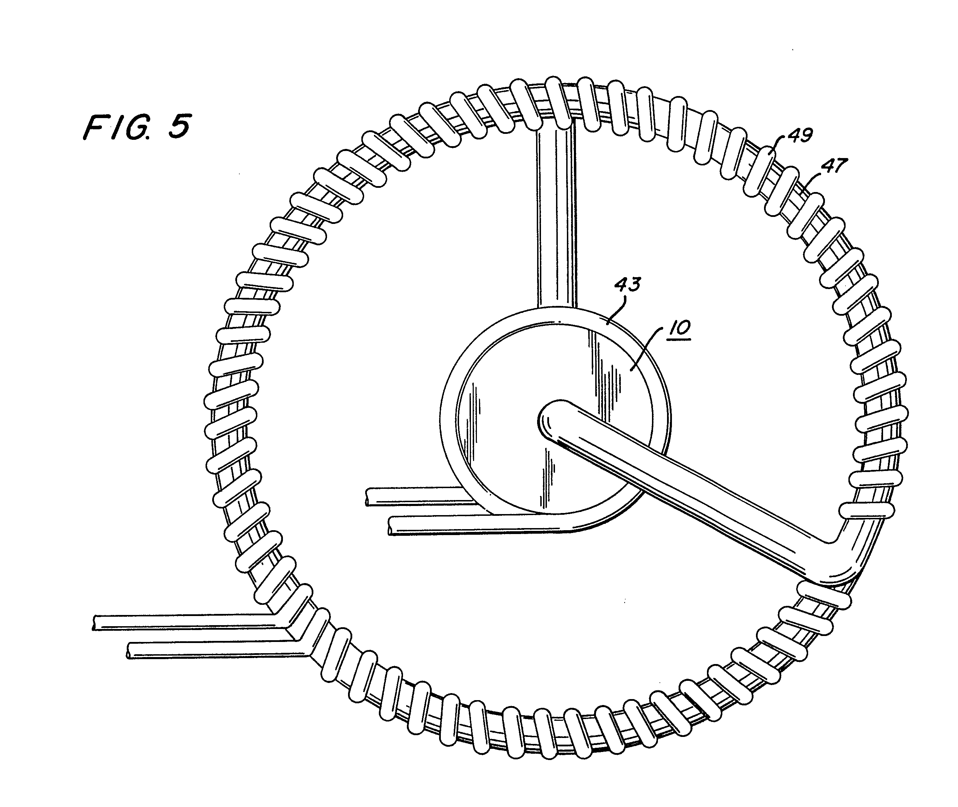

With particular reference to Figure 5 there is illustrated a coil arrangement 49 that utilizes the entire magnetic flux in the closed loop tubing 47. The configuration is that of a coaxial arrangement with the primary winding 43 as a center core.

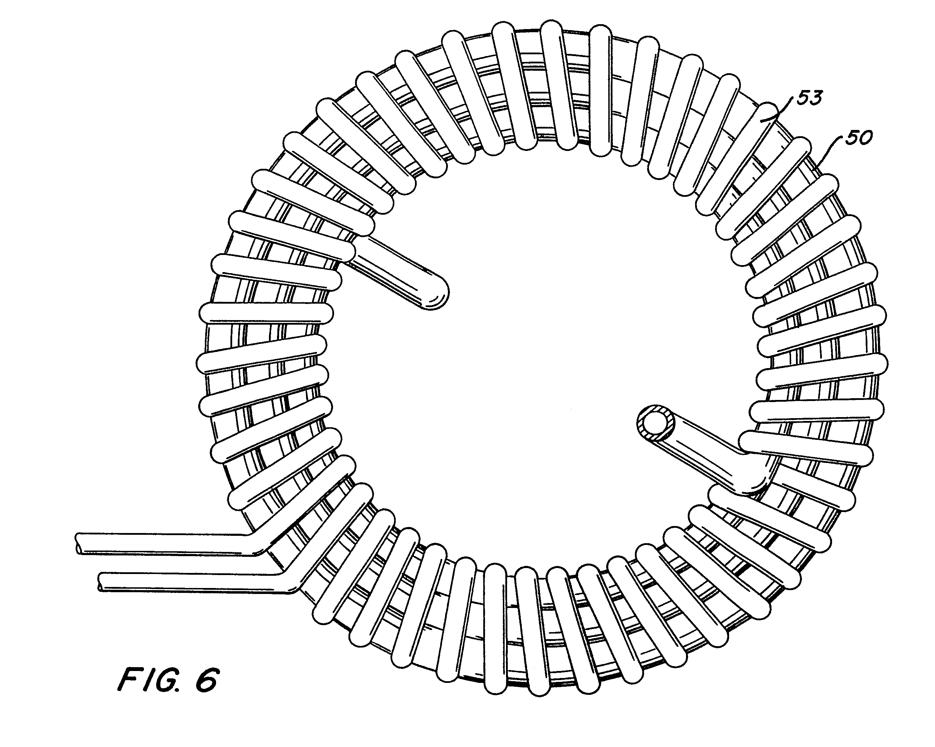

Figure 6 illustrates a concentric spiral configuration of the tubing 50 having the secondary windings 53 wound over it's entirety.

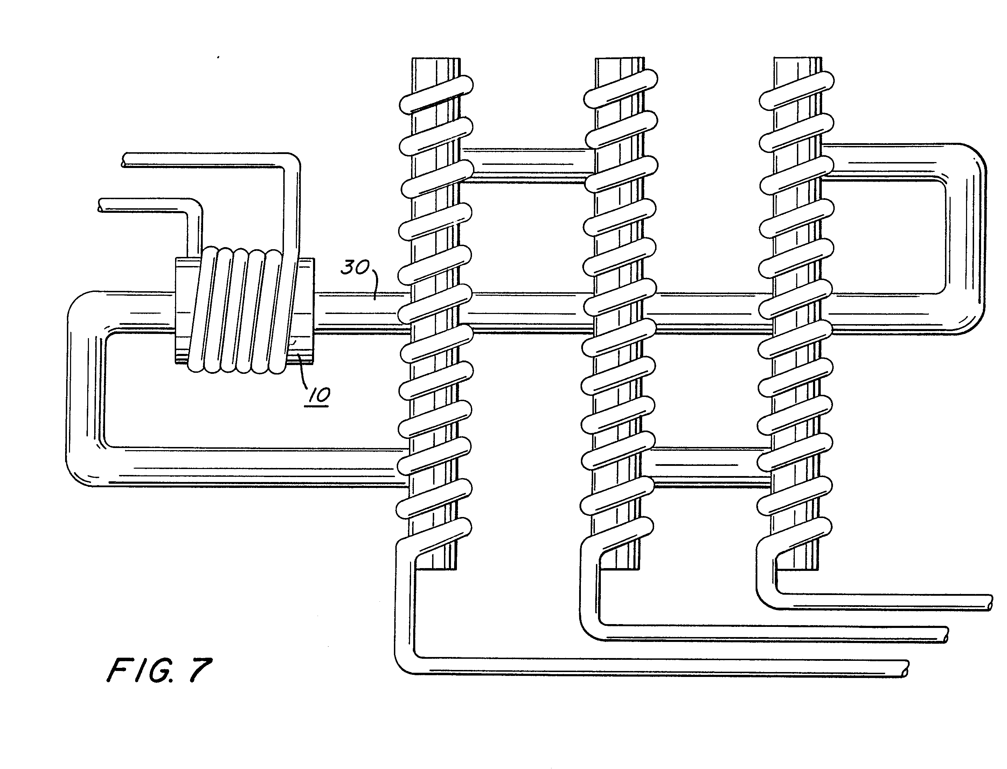

In Figure 7 the particle accelerator 10 is wound over the tubing 30 much in the same manner as the Figures 1 and 2. However, in this embodiment the tubing 30 is a continuous closed loop but in a series, parallel configuration. That is electrically there are three secondary windings with three outputs whereas the tubing 30 is in series through the three secondary windings.

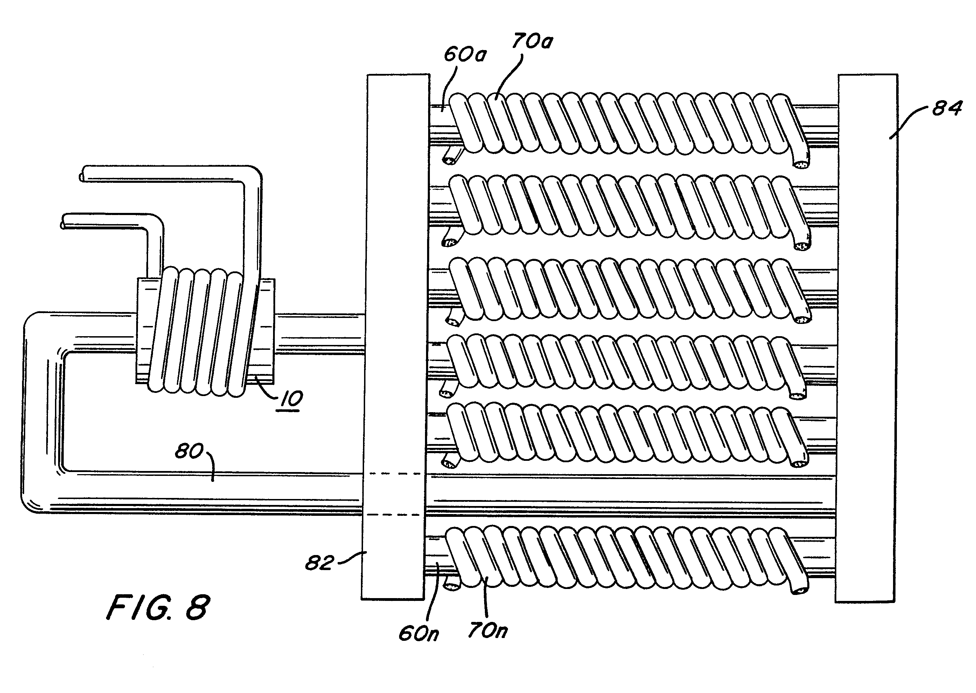

In Figure 8 the reverse of that configuration of Figure 7 is shown. That is the several pick-up coils are wound in series; whereas the tubing 80 is not a continuous tubing as that of the other configuration. Principally, there is disclosed an input manifold 82 and an output manifold 84 with the several tubings 60a xxx n interconnecting the two manifolds. Each one of the aforesaid secondary coils 70a xxx n are wound over its respective tubing.

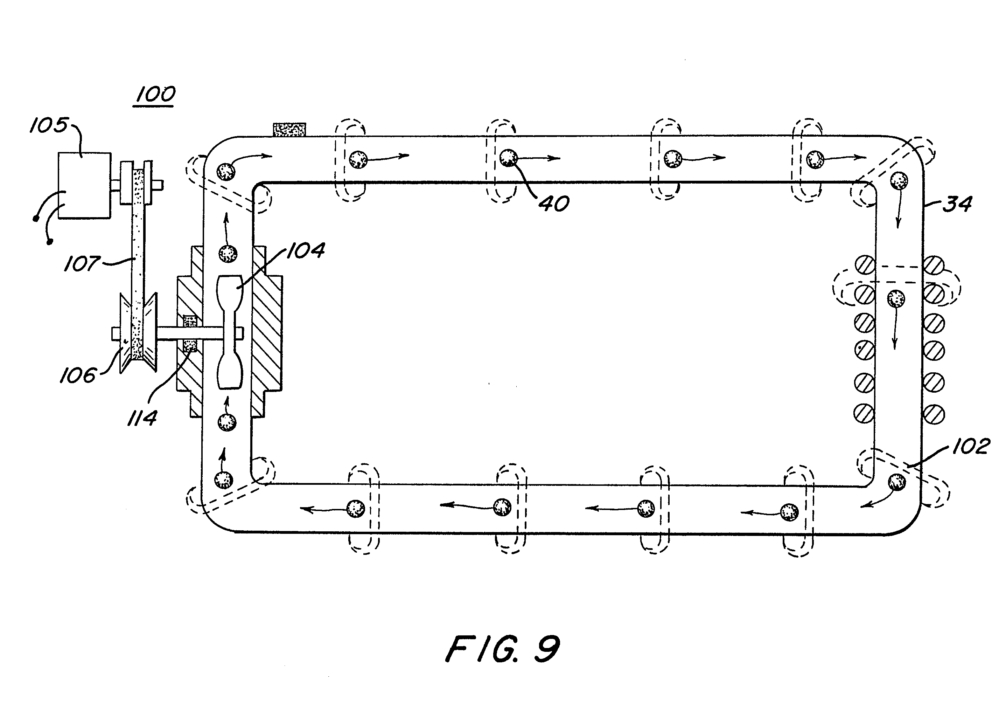

The magnetic particle accelerator 10 may comprise configurations and structures distinctive from the electrical accelerator of Figure 1. With reference to Figure 9 there is illustrated a mechanical particle accelerator 100. In this embodiment the magnetic particles 102 are permanently magnetized prior to being encapsulated in non-magnetic pipe 110. The particles 102 are accelerated by fan blade or pump 104 rotated by mechanical drive assembly 106. The mechanical drive for the assembly 106 may comprise a pulley 112 attached by a belt or like to an electric motor. A sealing bearing 114 retains the particles 102 within the pipe 110.

It was stated above, the particles traversing the secondary coils a voltage/current is generated therein. It must be appreciated that the particles are not in actuality traversing the coils but are in fact traversing the magnetic field of the coils.

Again, the pipe 30 is described as a non-magnetic pipe. There are certain non-magnetic pipes that would not be operable in the present invention. That is, the pipe 30 must be capable of passing magnetic lines of force; and that it is these magnetic lines of force that traverse the inductive field of the secondary windings 20 to induce a voltage/current therein.

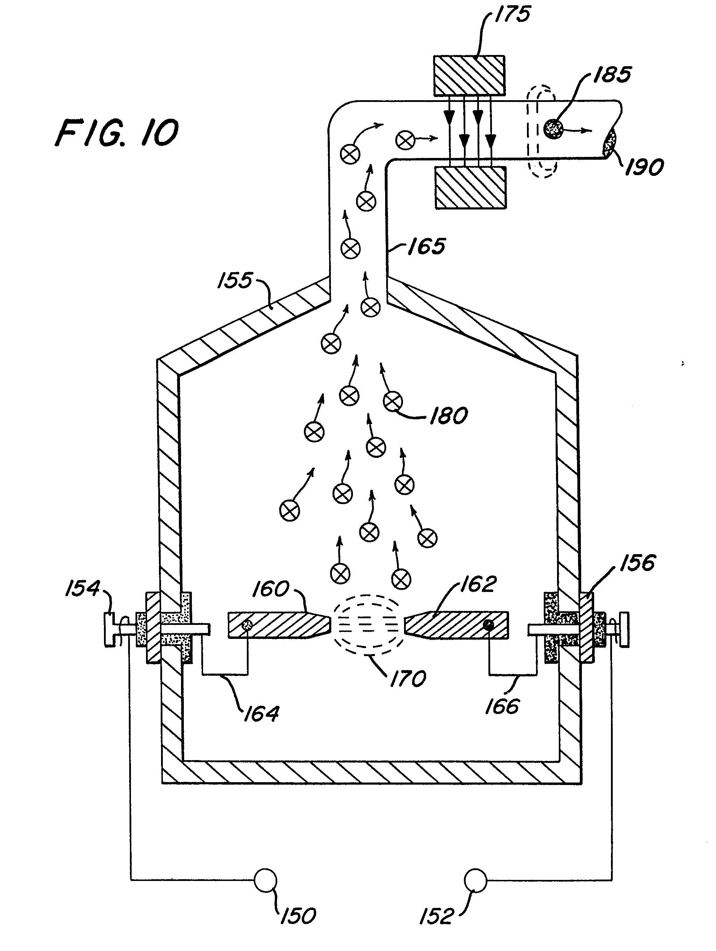

A significant feature of the invention illustrated in the various embodiments hereintofore described, as the generation of the magnetized particles encapsulated in the tubing. With reference to Figure 10, there is illustrated apparatus for carrying out the process of vaporizing material into vaporized particles and thereafter magnetizing the particles by subjecting them to a magnetic field.

The chamber 155 is a vacuated chamber having positioned in its lower half portion a pair of electrodes 160 and 162 of magnetizable material. A source of voltage 150 and 152 provides voltage and current of opposite polarity via terminals 154 and 156 to the electrodes 160 and 162 via wire connections 164 and 166. The area 161 between the end of the electrodes 160 and 162 is the spark gap.

Upon the application of power to the magnetizable material electrodes 160 and 162 the tip of the electrodes in the spark gap will be vaporized into particles 180.

The particles 180 rise, use and enter into non-magnetic pipe 165. As the particles progress in movement they pass between the magnetic field generator 175. The particles each take on a magnetic charge as magnetized particles 185 and thereafter are discharged via port 190 to the electrical particle generator above described.

In the simplified preferred embodiment of Figures 1 and 2, as well as the referred preferred embodiments it was indicated that a low voltage was applied to the particle accelerator 10. Upon acceleration a high voltage/current would be induced in the secondary pickup coil 20. A most significant advantage of the present invention is that the voltage amplification is irrespective to the wave-shape of the input voltage. Specifically, if the input voltage is direct current a direct current voltage will be at the output; an alternating voltage will result in an alternating voltage at the output; a pulsed voltage will result in a pulsed voltage at the output; and a voltage of any other configuration will result in a similar configuration at the output.

Although certain embodiments have been shown it is to be understood modifications may be had without departing from the spirit and scope of the invention.

## CLAIMS



0098897

1. An electrical particle generator comprising; a non-magnetic closed-loop tubing, passing magnetic lines of force, a particle accelerator positioned adjacent to one end of said tubing, a secondary inductive winding positioned adjacent to said tubing opposite to the position of said accelerator, a substantial volume of magnetized elements encapsulated in said tubing; said accelerator having means to provide a low input voltage; and said secondary winding having means for tapping a high voltage/current for utilization.

2. The electrical particle generator of Claim 1 wherein said magnetized elements are particles suspended in a fluid medium.

3. The electrical particle generator of Claim 2 wherein said magnetized elements is a gas.

4. The electrical particle generator of Claim 2 wherein said magnetized elements is a liquid.

5. The electrical particle generator of Claim 2 wherein said magnetized elements is a solid.

6. The electrical particle accelerator of Claim 1 wherein said particle accelerator is an electrical magnetic particle accelerator.

0098897

7. The electrical particle generator of Claim 1 wherein said particle accelerator further comprises a primary inductive winding, and a low voltage input to said winding.

8. The electrical particle generator of Claim 4 wherein said low voltage input is a variable voltage input for controlling the magnitude of the voltage/current induced in said secondary winding.

9. The electrical particle generator of Claim 4 wherein said input voltage to said primary winding is direct current, and wherein said output voltage is a direct current/voltage.

10. The electrical particle generator of Claim 4 wherein said input voltage to said primary winding is alternating current and wherein said output current/voltage is an alternating current/voltage.

11. The electrical particle generator of Claim 4 wherein said input voltage to said primary winding is pulsed, and wherein said output current/voltage is a pulsed current/voltage.

12. The electrical particle generator of Claim 4 wherein said input voltage to said primary winding has variable waveform, and wherein said output current/voltage will have a similar waveform as said input voltage waveform.

13. The electrical particle generator of Claim 4 wherein said particle accelerator further comprises a magnetic forming core, and wherein said core has an opening slightly greater than the outside diameter of said tubing and adapted to receive the same.

14. The electrical particle generator of Claim 1 said tubing has at said opposite end three parallel discrete branches and wherein said secondary coil is three discrete coils with three discrete outputs one of each positioned over one of each of said tubing branches thereby providing a three phase output.

15. The electrical generator of Claim 1 wherein said particle accelerator comprises mechanical pump means, and wherein said magnetized elements are permanently magnetized elements.

16. An assembly for providing a magnetized particle for utilization in an electrical particle generator comprising a chamber and a pair of magnetizable material electrodes positioned therein,

a source of voltage/current of opposite polarity applied to said electrodes,

said magnetizable material becoming vaporized upon the application of said voltage/current in said electrodes,

a pipe connected to said chamber, and means directing said vaporized particles to said pipe,

a magnetic field generator having the other end of said pipe positioned within its magnetic field,

and wherein said vaporized particles entering and being expelled through said pipe become magnetized by passing through said magnetic field generator.

30
34
22
10
16
12
14
20
32

FIG. 1

FIG. 2
20
34
40
30
10
32
12

FIG. 3

35
31
33
10
21
23
25

45
10
30
FIG. 4

47
49
10
43

FIG. 5

50
53

FIG. 6

30
10

FIG. 7

84
70a
60a
70n
60n
82
10
80

FIG. 8

34
102
40
104
114
106
107
105
100

FIG. 9

FIG. 10
175
185
190
165
155
180
154
160
162
156
170
164
166
150
152